# EUROPÄISCHE PATENTSCHRIFT

(11) **EP 1 923 115 B1**
(45) Veröffentlichungstag und Bekanntmachung des Hinweises auf die Patenterteilung: **24.03.2010**
(21) Anmeldenummer: 07116803.3
(22) Anmeldetag: 20.09.2007
(51) Int. Cl.: B01D 29/01, B01D 29/07, B01D 46/52

(54) **Filtereinsatz**
Filter insert
Installation de filtre

(30) Priorität: 16.11.2006 DE 202006017617 U
(43) Veröffentlichungstag der Anmeldung: 21.05.2008
(73) Patentinhaber: MANN+HUMMEL GmbH, 71638 Ludwigsburg (DE)
(72) Erfinder: Volkmer, Daniel, 84130 Dingolfing (DE)

(56) Entgegenhaltungen:
- EP-A- 1 464 372
- DE-A1- 19 548 197
- DE-A1- 19 840 146
- DE-A1-102004 037 468
- DE-C1- 19 757 423
- DE-U1- 20 313 468
- US-A- 3 397 518

## Beschreibung

### Technisches Gebiet

Die Erfindung bezieht sich auf einen Filtereinsatz, der dichtend in ein Filtergehäuse einsetzbar ist, mit einem Filterelement, dessen mindestens eine Stirnseite von einer Verstärkungsklammer eingefasst ist, an welcher ein Dichtungselement angeordnet ist.

### Stand der Technik

In der DE 197 57 423 C1 wird ein Filtereinsatz beschrieben, der einen Faltenfilter umfasst, welcher in ein Filtergehäuse einsetzbar ist. Die Stirnseiten des Faltenfilters sind von formstabilisierenden, klammerförmigen Verstärkungselementen eingefasst, an denen einstückig eine Dichtung angeformt ist, die unter elastischer Vorspannung dichtend an die angrenzende Gehäusewand des Filtergehäuses anlegbar ist. Für kostengünstige Herstellung sind das Verstärkungselement und die Dichtung sind zu einem gemeinsamen Bauteil zusammengefasst. Da das Verstärkungselement und die Dichtung aus dem gleichen Werkstoff bestehen und gewährleistet sein muss, dass die Dichtung unter elastische Vorspannung gesetzt werden kann, muss ein verhältnismäßig weicher und nachgiebiger Werkstoff gewählt werden, andernfalls können die geforderten Dichtungseigenschaften nicht realisiert werden.

Die DE 203 13 468 U1 zeigt einen Filtereinsatz, der von einem Rahmen eingefasst ist, welcher als Dichtstreifen ausgebildet ist, wobei an den Dichtstreifen eine Doppeldichtlasche angeklebt oder angeschweißt ist. Die Doppeldichtlasche ist V-förmig ausgebildet und besitzt zueinander winklig angeordnete Dichtlaschen, die sich über die Außenseite des Dichtstreifens erheben. Die beiden Schenkel der V-förmigen Doppeldichtlasche sind radial nach außen gerichtet. Aufgrund der winkligen Spreizung der beiden Schenkel eignet sich die Doppeldichtlasche nicht zur axialen Abdichtung. **Offenbarung der Erfindung**

Der Erfindung liegt die Aufgabe zugrunde, mit einfachen konstruktiven Maßnahmen und in kostengünstiger Weise einen Filtereinsatz zu schaffen, der dichtend in ein Filtergehäuse einsetzbar ist. Gemäß eines weiteren Aspektes der Erfindung soll zweckmäßig sowohl eine radiale als auch eine axiale Abdichtung mit einfachen Mitteln zu bewerkstelligen sein.

Diese Aufgabe wird erfindungsgemäß mit den Merkmalen des Anspruches 1 gelöst. Die Unteransprüche geben zweckmäßige Weiterbildungen an.

An dem erfindungsgemäßen Filtereinsatz ist eine Verstärkungsklammer vorgesehen, die das Filterelement, welches Bestandteil des Filtereinsatzes ist, an zumindest einer Stirnseite einfasst. An der Verstärkungsklammer ist ein Dichtungselement angeordnet, das als von der Verstärkungsklammer unabhängiges, separates Bauteil ausgeführt ist. Dieses Dichtungselement weist zwei äußere Dichtabschnitte auf, die über einen zentralen Dichtabschnitt miteinander verbunden sind, welcher an einer Wandung der Verstärkungsklammer befestigt ist. Die äußeren Dichtabschnitte der Verstärkungsklammer sind dagegen beweglich am zentralen Dichtabschnitt gehalten, sie können gegenüber dem zentralen Dichtabschnitt eine Relativbewegung ausführen. Auf diese Weise ist es möglich, dass die äußeren Dichtabschnitte bei der Überführung von der unbelasteten Ruhestellung in die Dichtposition ihre Relativlage, bezogen auf den zentralen Dichtabschnitt, ändern, ohne dass von dieser Relativbewegung die Verbindung zwischen dem zentralen Dichtabschnitt und dem Wandabschnitt an der Verstärkungsklammer beeinträchtigt ist. Insbesondere sind die Einzelbewegungen der äußeren Dichtabschnitte unabhängig voneinander, so dass jeder äußere Dichtabschnitt ungeachtet der Bewegung des gegenüberliegenden Dichtabschnittes zwischen Ruhestellung und Dichtstellung überführbar ist. Aufgrund der Zugehörigkeit zu einem gemeinsamen Dichtungselement ist trotz der unabhängigen Bewegungsmöglichkeiten eine konstruktive einfache Abdichtung gegeben, die leicht zu montieren ist und an die jeweiligen konstruktiven Gegebenheiten mit geringem Aufwand angepasst werden kann.

In zweckmäßiger Weiterbildung ist vorgesehen, dass sich einer der äußeren Dichtabschnitte über die axiale Stirnseite der Verstärkungsklammer erstreckt und der zweite äußere Dichtabschnitt sich seitlich an einer Wandung der Verstärkungsklammer befindet, was eine Abdichtung sowohl an der Stirnseite, also in Axialrichtung, als auch in Radialrichtung ermöglicht. Das Dichtungselement erstreckt sich hierbei zweckmäßig über die gesamte Länge der Verstärkungsklammer.

Als Verstärkungsklammer wird vorteilhaft ein U-förmiges Bauteil eingesetzt, das eine Stirnseite des Filterelementes umklammert, wobei als Filterelement zweckmäßig ein Faltenfilter aus Papier oder einem papierähnlichen Material aus natürlichem oder künstlichem Werkstoff eingesetzt wird. Derartige Filterelemente finden insbesondere in Luftfiltern, beispielsweise für Brennkraftmaschinen, oder auch in Flüssigkeitsfiltern, beispielsweise für Öl oder Kraftstoff Verwendung.

Aufgrund der Ausführung als separate Bauteile können die Verstärkungsklammer und das Dichtungselement aus unterschiedlichen Werkstoffen gefertigt sein, die für den jeweiligen Verwendungszweck des betreffenden Bauteiles am besten geeignet sind. Das Dichtungselement ist beispielsweise als Schaumstoffstreifen ausgeführt.

Um die Relativbeweglichkeit zwischen äußerem Dichtabschnitt und zentralem Dichtabschnitt zu verbessern, kann im Übergang zwischen diesen beiden Abschnitten eine Sollbiegestelle in den Dichtkörper eingebracht sein, die ein definiertes Biegeverhalten bei Dichtbelastung des äußeren Dichtabschnittes sicherstellt. Diese Sollbiegestelle ist beispielsweise als verjüngter Wandabschnitt im Dichtkörper ausgebildet oder besitzt eine Einprägung, welche die Umbiegung erleichtert.

Das Dichtungselement kann mit dem zentralen Dichtabschnitt entweder an eine Wandung der Verstärkungsklammer angespritzt sein oder das Dichtungselement ist mit dem zentralen Dichtabschnitt an die Wandung der Verstärkungsklammer angeklebt. Beide Ausführungen sind mit einfachen Maßnahmen zu realisieren und gewährleisten eine ausreichend sichere Verbindung zwischen Verstärkungsklammer und Dichtungselement. In Betracht kommen aber auch anderweitige Verbindungsarten, beispielsweise mechanische Verbindungen wie Einklemmen, Anschrauben oder dergleichen.

### Kurze Beschreibung der Zeichnungen

Weitere Ausführungen und zweckmäßige Weiterbildungen sind den weiteren Ansprüchen, der Figurenbeschreibung und den Zeichnungen zu entnehmen. Es zeigen:

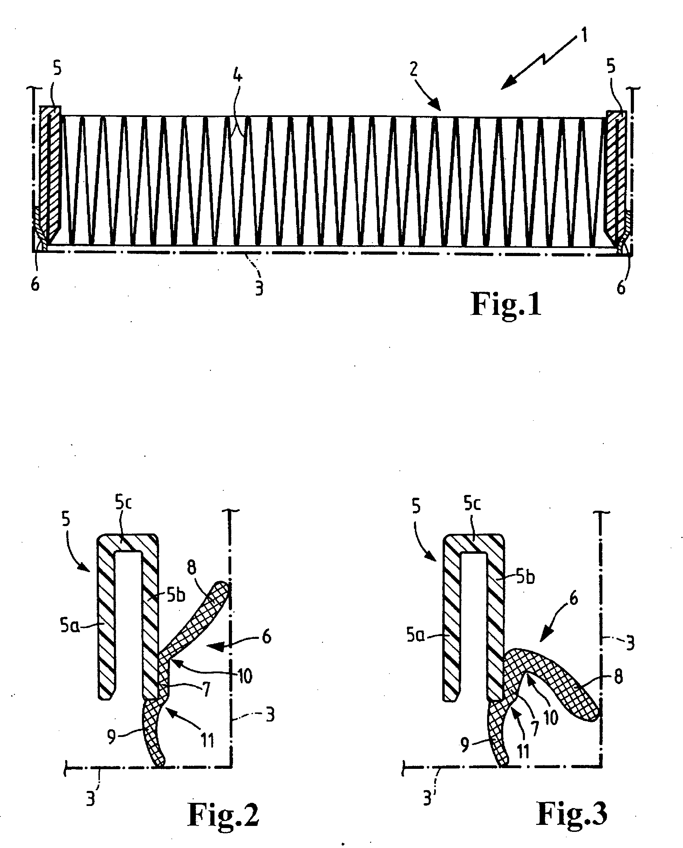

Fig. 1 einen Schnitt durch einen Filtereinsatz, der dichtend in ein Filtergehäuse eingesetzt ist, mit stirnseitig angeordneten Verstärkungselementen, welche die Stirnfalte des als Faltenfilter ausgebildeten Filterelementes des Filtereinsatzes einfassen, wobei an der Außenwand der Verstärkungsklammer ein Dichtungselement angeordnet ist, über das eine strömungsdichte Verbindung zwischen dem Filtereinsatz und dem umschließenden Filtergehäuse gegeben ist,

Fig. 2 eine Verstärkungsklammer im Schnitt in vergrößerter Darstellung einschließlich des Dichtungselementes, welches aus einem zentralen Dichtabschnitt besteht, über das das Dichtungselement mit der Verstärkungsklammer verbunden ist, sowie zwei äußeren Dichtabschnitten, die gegenüber dem zentralen Dichtabschnitt relativbeweglich ausgebildet sind,

Fig. 3 eine Fig. 2 entsprechende Darstellung, mit dem seitlichen, äußeren Dichtabschnitt des Dichtungselementes in einer abgewinkelten Position.

### Ausführungsform(en) der Erfindung

Der in Fig. 1 dargestellte Filter - ein Gasfilter, insbesondere Luftfilter, oder Flüssigkeitsfilter wie Öl- oder Kraftstofffilter - umfasst einen Filtereinsatz 2, der dichtend in ein Filtergehäuse 3 des Filters eingesetzt ist. Der Filtereinsatz 2 besteht aus einem Filterelement 4, das als Faltenfilter ausgeführt ist, und aus Verstärkungsklammern 5, die jeweils eine stirnseitige Falte des Faltenfilters klammernd umgreifen. An der außen liegenden Wandseite jeder Verstärkungsklammer 5 ist ein Dichtungselement 6 angeordnet, über das die Dichtigkeit zwischen dem Filtereinsatz 2 und dem aufnehmenden Filtergehäuse 3 sichergestellt wird. Das Dichtungselement 6 ist als eigenständiges und von der Verstärkungsklammer 5 unabhängiges Bauteil ausgebildet, das aber fest mit der Verstärkungsklammer 5 verbunden ist, insbesondere angeklebt oder angespritzt ist.

Wie der vergrößerten Darstellung gemäß Fig. 2 zu entnehmen, ist die Verstärkungsklammer 5 U-förmig ausgebildet und umfasst zwei Seitenwände 5a und 5b sowie einen verbindenden Steg 5c, wodurch eine Nut in der Verstärkungsklammer 5 gebildet ist, die zur Aufnahme der Stirnfalte des Filterelementes vorgesehen ist. An der radial außen liegenden Wand 5b der Verstärkungsklammer befindet sich das Dichtungselement 6, welches dreiteilig mit einem zentralen Dichtabschnitt 7 und zwei einstückig mit dem zentralen Dichtabschnitt ausgebildeten, äußeren Dichtabschnitten 8 und 9 ausgeführt ist. Der zentrale Dichtabschnitt 7 ist fest mit der Außenseite der radial äußeren Seitenwand 5b verbunden, wohingegen die äußeren Dichtabschnitte 8 und 9 gegenüber dem zentralen Dichtabschnitt 7 relativbeweglich ausgebildet sind, insbesondere schwenkbeweglich. Der erste äußere Dichtabschnitt 8 erstreckt sich an der Seite der Seitenwand 5b, der zweite äußere Dichtabschnitt 9 erstreckt sich dagegen an der axialen Stirnseite dieser Seitenwand 5b. Die jeweiligen freien Stirnseiten der äußeren Dichtabschnitte 8 und 9 gelangen in der Dichtposition, die mit der Einbaulage des Filtereinsatzes identisch ist, in Anlage an die Innenwandungen des Filtergehäuses 3, wobei der seitliche äußere Dichtabschnitt 8 an die entsprechende, seitliche Innenwand des Gehäuses und der axial überstehende äußere Dichtabschnitt 9 an der zugeordneten axialen Innenwand des Filtergehäuses anliegt.

Wie insbesondere einem Vergleich der Fig. 2 und 3 zu entnehmen, sind die äußeren Dichtabschnitte 8 und 9 gegenüber dem zentralen Dichtabschnitt 7 schwenkbeweglich gehalten. Diese Schwenkbeweglichkeit wird zum einen dadurch ermöglicht, dass der zentrale Dichtabschnitt 7 über seine gesamte der Verstärkungsklammer 5 zugewandte Fläche mit der Außenseite der Seitenwand 5b der Verstärkungsklammer verbunden ist, insbesondere verklebt oder angespritzt ist, wohingegen die äußeren Dichtabschnitte 8 und 9 keine unmittelbare Verbindung zur Verstärkungsklammer 5 aufweisen. Zum anderen wird die Schwenkbeweglichkeit dadurch unterstützt und verbessert, dass im Übergangsbereich zwischen zentralem Dichtabschnitt 7 und den beiden äußeren Dichtabschnitten 8 und 9 jeweils eine Sollbiegestelle 10 und 11 in den Dichtkörper des Dichtungselementes eingebracht ist, die durch eine Einschnürung, einen verjüngten Abschnitt oder dergleichen hergestellt wird. Hierdurch wird ein definiertes Biegeverhalten der äußeren Dichtabschnitte in Bezug auf den zentralen Dichtabschnitt erreicht, wodurch auch nach häufigem Einsatz noch eine definierte Anlage des Dichtungselementes an das Filtergehäuse in der Dichtstellung gewährleistet ist.

## Patentansprüche

1. Filtereinsatz, der dichtend in ein Filtergehäuse (3) einsetzbar ist, mit einem Filterelement (4), dessen mindestens eine Stirnseite von einer Verstärkungsklammer (5) eingefasst ist, an der ein Dichtungselement (6) angeordnet ist, **dadurch gekennzeichnet, dass** die Verstärkungsklammer (5) und das Dichtungselement (6) als separate Bauteile ausgeführt sind und das Dichtungselement (6) zwei äußere Dichtabschnitte (8, 9) aufweist, die über einen zentralen Dichtabschnitt (7) miteinander verbunden sind, der mit einer Wandung (5b) der Verstärkungsklammer (5) verbunden ist, wobei die äußeren Dichtabschnitte (8, 9) beweglich am zentralen Dichtabschnitt (7) gehalten sind, dass ein erster äußerer Dichtabschnitt (8) sich seitlich der Wandung (5b) der Verstärkungsklammer (5) befindet, dass ein zweiter äußerer Dichtabschnitt (9) der Stirnseite der Wandung (5b) der Verstärkungsklammer (5) axial vorgelagert ist, dass in den Übergang zwischen zentralem Dichtabschnitt (7) und den beiden äußeren Dichtabschnitten (8, 9) jeweils eine Sollbiegestelle (10, 11) in den Dichtkörper des Dichtungselements (6) eingebracht ist und dass der zentrale Dichtabschnitt (7) über seine gesamte der Verstärkungsklammer (5) zugewandte Fläche mit der Außenseite der Seitenwand (5b) der Verstärkungsklammer (5) verbunden ist.

2. Filtereinsatz nach Anspruch 1, **dadurch gekennzeichnet, dass** das Dichtungselement (6) an die Verstärkungsklammer (5) angespritzt ist.

3. Filtereinsatz nach Anspruch 1 oder 2, **dadurch gekennzeichnet, dass** das Dichtungselement (6) an die Verstärkungsklammer (5) angeklebt ist.

4. Filtereinsatz nach einem der Ansprüche 1 bis 3, **dadurch gekennzeichnet, dass** das Filterelement (4) als Faltenfilter ausgeführt ist.

5. Filtereinsatz nach einem der Ansprüche 1 bis 4, **dadurch gekennzeichnet, dass** zwei gegenüberliegende Stirnseiten des Filterelements (4) von jeweils einer Verstärkungsklammer (5) mit daran angeordnetem Dichtungselement (6) eingefasst sind.

6. Filtereinsatz nach einem der Ansprüche 1 bis 5, **dadurch gekennzeichnet, dass** das Dichtungselement (6) als Schaumstoffstreifen ausgeführt ist.

## Claims

1. Filter insert which can be inserted sealingly into a filter housing (3), with a filter element (4) the at least one front side of which is surrounded by a reinforcement clamp (5) where a sealing element (6) is disposed, **characterized in that** the reinforcement clamp (5) and the sealing element (6) are designed as separate subassemblies and that the sealing element (6) features two external sealing sections (8, 9) which are interconnected via a central sealing section (7) which is connected with the wall (5b) of the reinforcement clamp (5), the external sealing sections (8, 9) being movably attached at the central sealing section (7), that a first external sealing section (8) is located at the side of the wall (5b) of the reinforcement clamp (5), that a second external sealing section (9) is axially disposed upstream of the front side of the wall (5b) of the reinforcement clamp (5), that in the intersection between the central sealing section (7) and the two external sealing sections (8, 9) a predetermined bending point (10, 11) each is incorporated into the grommet of the sealing element (6) and that the central sealing section (7) is connected via its total surface facing the reinforcement clamp (5) with the exterior side of the lateral wall (5b) of the reinforcement clamp (5).

2. Filter insert according to claim 1, **characterized in that** the sealing element (6) is injection-molded to the reinforcement clamp (5).

3. Filter insert according to claim 1 or 2, **characterized in that** the sealing element (6) is glued to the reinforcement clamp (5).

4. Filter insert according to one of the claims 1 to 3, **characterized in that** the filter element (4) is designed as fluted filter.

5. Filter insert according to one of the claims 1 to 4 **characterized in that** two opposite front sides of the filter element (4) are surrounded by one reinforcement clamp (5) each with the sealing element (6) disposed on it.

6. Filter insert according to one of the claims 1 to 5, **characterized in that** the sealing element (6) is designed as foam strip.

## Revendications

1. Insert de filtre pouvant être monté de façon étanche dans un boîtier de filtre (3), avec un élément filtrant (4) dont au moins une face frontale est bordée par une bride de renfort (5) sur laquelle est disposé un élément d'étanchéité (6), **caractérisé en ce que** la bride de renfort (5) et l'élément d'étanchéité (6) sont exécutés en tant que composants séparés et que l'élément d'étanchéité (6) présente deux sections d'étanchéité extérieures (8, 9) reliées l'une à l'autre par une section d'étanchéité centrale (7) qui est reliée à une paroi (5b) de la bride de renfort (5), les sections d'étanchéité extérieures (8, 9) étant maintenues de manière mobile sur la section d'étanchéité centrale (7), **en ce qu'**une première section d'étanchéité extérieure (8) se trouve sur le côté de la paroi (5b) de la bride de renfort (5), **en ce qu'**une deuxième section d'étanchéité extérieure (9) se situe en amont, en sens axial, de la face frontale de la paroi (5b) de la bride de renfort (5), **en ce que** respectivement un point destiné au pliage (10, 11) est prévu dans le corps d'étanchéité de l'élément d'étanchéité (6), dans la transition entre la section d'étanchéité centrale (7) et les deux sections d'étanchéité extérieures (8, 9), et **en ce que** la section d'étanchéité centrale (7) est reliée sur toute sa surface orientée vers la bride de renfort (5) à la face extérieure de la paroi latérale (5b) de la bride de renfort (5).

2. Insert de filtre selon la revendication 1, **caractérisé en ce que** l'élément d'étanchéité (6) est injecté sur la bride de renfort (5).

3. Insert de filtre selon la revendication 1 ou 2, **caractérisé en ce que** l'élément d'étanchéité (6) est collé sur la bride de renfort (5).

4. Insert de filtre selon l'une des revendications 1 à 3, **caractérisé en ce que** l'élément d'étanchéité (6) est exécuté en tant que filtre à plis.

5. Insert de filtre selon l'une des revendications 1 à 4, **caractérisé en ce que** deux faces frontales opposées de l'élément filtrant (4) sont bordées respectivement par une bride de renfort (5) dotée d'un élément d'étanchéité (6) disposé dessus.

6. Insert de filtre selon l'une des revendications 1 à 5, **caractérisé en ce que** l'élément d'étanchéité (6) est exécuté en tant que bande de mousse.
